# FASCICULE DE BREVET EUROPEEN

(11) **EP 0 777 800 B1**
(45) Date de publication et mention de la délivrance du brevet: **17.10.2001**
(21) Numéro de dépôt: 96917619.7
(22) Date de dépôt: 28.06.1996
(51) Int. Cl.: E04F 13/02, C04B 41/60, B32B 13/08

(54) **PROCEDE DE CONSTRUCTION DE SECOND OEUVRE**
KONSTRUKTIONSVERFAHREN FÜR AUSBAUARBEITEN
CONSTRUCTION METHOD FOR BUILDING FINISHING WORKS

(30) Priorité: 30.06.1995 FR 9508153
(43) Date de publication de la demande: 11.06.1997
(60) Demande divisionnaire: 01113122.4
(73) Titulaire: LAFARGE PLATRES, 84000 Avignon (FR)
(72) Inventeur: ZUBER, François, F-84270 Vedène (FR); LECLERCQ, Claude, F-84800 Pernes-les-Fontaines (FR); BOURNE-CHASTEL, Pascal, F-84570 Mormoiron (FR)
(74) Mandataire: Guerre, Dominique
(86) Numéro de dépôt international: IB9600620
(87) Numéro de publication internationale: WO9702395

(56) Documents cités:
- EP-A- 0 496 682
- EP-A- 0 521 804
- FR-A- 2 505 908

## Description

La présente invention concerne la construction de second oeuvre. Plus particulièrement, l'invention s'intéresse à tout procédé de construction, selon lequel on dispose, d'une part, de plaques préfabriquées, comportant un corps de plâtre et au moins une feuille de papier ou carton de parement, dont au moins une couche externe présente une face extérieure apparente, prête à être décorée, et d'autre part, d'au moins un enduit complémentaire de jointoiement pouvant être utilisé notamment pour la finition d'un joint. Ensuite, on assemble lesdits éléments plats entre eux, avec un enduit de bouchage constituant l'essentiel des joints entre les différentes plaques, et on finit les joints avec ledit enduit complémentaire, appliqué sur l'enduit de bouchage, de manière à obtenir une surface d'ensemble extérieure et apparente, relativement uniforme ou plane, y compris au niveau des joints. Un tel procédé est mis en oeuvre, par exemple pour définir des espaces à l'intérieur d'un bâtiment, notamment des cloisons.

Conformément au document **EP-A-0 521 804**, le papier de parement peut comporter une couche supérieure dite jet supérieur, comprenant des fibres cellulosiques blanches, majoritairement chimiques, et une charge minérale de couleur claire, de préférence blanche, et une couche pigmentaire revêtissant la couche supérieure, comprenant une charge minérale de couleur claire, de préférence blanche, et un liant.

En général, la surface d'ensemble, extérieure et apparente, obtenue selon le procédé défini précédemment nécessite d'être préparée, avant de recevoir toute décoration en surface, qu'il s'agisse d'une ou plusieurs couches d'un revêtement en film, du type peinture ou laque, ou qu'il s'agisse d'une épaisseur de papier peint. Cette préparation est rendue nécessaire, notamment par les différences de teinte ou de couleur existant entre la face extérieure apparente des plaques de plâtre d'une part, et la face extérieure apparente des joints d'autre part. Cette préparation consiste, après terminaison du second oeuvre, à revêtir la surface d'ensemble obtenue, c'est-à-dire le parement des plaques plus les joints, avec une ou plusieurs couches d'une peinture ou enduit d'impression ou d'apprêt.

L'opération de préparation représente un coût supplémentaire, non négligeable, dans un processus complet de construction d'un bâtiment par exemple. Et encore, n'est-elle pas suffisante, dans certains cas, pour obtenir une surface d'ensemble décorée d'aspect uniforme, compte tenu en particulier des différences physico-mécaniques subsistant entre les joints d'un côté, et les plaques de l'autre côté.

La présente invention a pour objet de remédier aux inconvénients précités. Plus précisément, l'invention a pour objet un procédé de construction rompant avec l'approche traditionnelle retenue pour résoudre le problème exposé précédemment, c'est-à-dire supprimant la nécessité d'une préparation de la surface d'ensemble, avant toute décoration. Toutefois, l'invention a pour objet un procédé qui reste compatible avec les pratiques des professionnels de la construction, notamment ceux du second oeuvre.

Conformément à la présente invention, le procédé se différencie de l'approche traditionnelle en ce que d'une part, la structure et/ou la composition du papier de parement, et d'autre part, la composition de l'enduit complémentaire sont ajustées l'une par rapport à l'autre, pour obtenir, à l'état sec de l'enduit complémentaire, une surface d'ensemble présentant une couleur ou teinte, ainsi qu'une absorption d'eau de surface, et éventuellement un aspect de surface dont une réflectance, sensiblement homogènes dans pratiquement toute la surface d'ensemble, y compris au niveau de la face extérieure apparente des joints, moyennant quoi ladite surface d'ensemble peut être décorée, sans préparation de celle-ci, telle que revêtement avec au moins une couche d'impression complémentaire.

La présente invention concerne également l'utilisation d'un enduit complémentaire de jointoiement, comprenant une charge minérale de couleur claire, de préférence blanche, dont la granulométrie est comprise entre 5 et 35 µm, pour la mise en oeuvre du procédé conforme à l'invention.

La présente invention apporte les avantages déterminants suivants, consécutifs à l'homogénéité en surface de la surface d'ensemble obtenue selon la présente invention, non seulement en termes de couleur ou teinte, mais aussi en termes de certaines caractéristiques physiques ou physico-chimiques.

Ainsi, en homogénéisant la capacité d'absorption surfacique du papier de parement et du joint complémentaire, on peut obtenir un aspect quasi parfait de la ou des couches de peinture, mais aussi une adhésion quasi uniforme d'un papier peint, ce qui favorise ultérieurement son décollement homogène.

Conformément à un mode d'exécution avantageux de l'invention, et pour une structure et/ou composition, préexistantes, de la feuille de papier de parement, on ajuste la composition de l'enduit complémentaire.

Selon une autre variante de l'invention, et à l'inverse de ce qui précède, pour une composition préexistante d'enduit complémentaire, on ajuste la composition de la feuille de papier de parement.

Par ailleurs, le procédé est plus préférentiellement caractérisé en ce que, outre la couleur ou teinte et l'absorption d'eau de surface, au moins l'une quelconque des caractéristiques physiques suivantes sont homogénéisées ou appariées entre plaques et enduit complémentaire, à savoir :
- l'aspect de surface, dont la réflectance ;
- la décoloration ou coloration sous l'effet de la lumière naturelle.

De manière avantageuse, ces différentes caractéristiques physiques sont définies comme suit :
- le facteur de réflectance de la surface d'ensemble, dont celui de la face extérieure apparente des joints, est compris entre 70% et 80%, et de préférence entre 72% et 76%, pour une longueur d'onde de 457 nm ;
- la décoloration ou coloration de la surface d'ensemble, dont celle de la face extérieure apparente des joints, présente un écart de couleur (delta E*) au plus égale à 3, après exposition pendant 72 heures à une source de rayonnement UV, disposée à 15 cm de la surface, de longueur d'onde au moins égale à 290 nm ;
- l'absorption surfacique d'eau de la surface d'ensemble, dont celle de la face extérieure apparente des joints, n'est pas inférieure à 60 minutes, et/ou est au plus égale à 15 g/m² selon le test COBB, à 23°C.

En pratique, et par des essais de routine, l'homme du métier compétent sait ajuster la structure et/ou la composition d'une feuille de papier de parement, et/ou la composition d'un enduit, de manière à satisfaire aux principes techniques définis précédemment, de telle sorte que les exemples décrits ci-après ne sont nullement limitatifs.

La présente invention sera maintenant décrite par référence à des plaques de plâtre préfabriquées. Ces plaques sont typiquement composées d'un corps de plâtre coulé en usine entre deux feuilles de papier constituant à la fois son parement et son armature.

Usuellement, l'une des feuilles de papier utilisées pour fabriquer les plaques de plâtre est de couleur foncée, pouvant varier entre une couleur grise et une couleur marron, car elle est composée de fibres cellulosiques n'ayant pas subi un traitement de purification particulier. Classiquement, ce papier dit gris est obtenu à partir de pâte chimique non blanchie, et/ou de pâte mécanique, et/ou de pâte thermomécanique, et/ou de pâte mi chimique. Par pâte mécanique, on entend habituellement une pâte obtenue entièrement par des moyens mécaniques à partir de diverses matières premières, essentiellement de bois, pouvant être apportées par des produits de récupération issus du bois tels que les vieux cartons, des rognures de papier kraft et/ou de vieux journaux. Par pâte thermomécanique, on entend une pâte obtenue par traitement thermique suivi d'un traitement mécanique de la matière première. Par pâte mi-chimique, on entend une pâte obtenue en éliminant de la matière première une partie de ses composants non cellulosiques au moyen d'un traitement chimique, et nécessitant un traitement mécanique ultérieur pour disperser les fibres.

L'autre feuille présente une face apparente dite de parement, de couleur généralement plus claire que la feuille grise. Pour obtenir cette couleur plus claire, la ou les couches de cette face sont à base de pâte chimique éventuellement blanchie, composée de fibres de cellulose recyclées et/ou neuves, et/ou de pâte mécanique éventuellement blanchie. Par pâte chimique, on entend une pâte obtenue en éliminant de la matière première par un traitement chimique, par exemple par cuisson en présence d'agents chimiques appropriés tels que la soude ou des bisulfites, une très grande proportion de ses composants non cellulosiques. Quand ce traitement chimique est complété par un blanchiment, on élimine une grande partie des substances colorées, ainsi que les substances risquant de se dégrader en vieillissant et de donner des teintes jaunes désagréables liées à la présence, par exemple de lignine.

Dans un mode d'exécution préférentiel du procédé de l'invention, et conformément au document EP-A-0 521 804, le papier de parement comporte une couche supérieure dite jet supérieur, comprenant des fibres cellulosiques blanches, majoritairement chimiques, une charge minérale de couleur claire, de préférence blanche, ainsi qu'une couche pigmentaire revêtissant la couche supérieure, comprenant également une charge minérale de couleur claire, de préférence blanche, et un liant. En correspondance, selon la présente invention, l'enduit complémentaire comprend une charge minérale de couleur claire,
de préférence blanche, dont la granulométrie est comprise entre 5 et 35 *µ*m.

La finesse de granulométrie de la charge minérale de l'enduit complémentaire permet d'obtenir une surface lisse correspondant à celle du parement de la plaque. Une granulométrie trop grosse de la charge provoque des défauts de surface d'ensemble, tels qu'une réverbération des rayonnements lumineux sur la surface de l'enduit, différente de celle sur la surface de plaque, entrainant des différences de ton et brillance de la teinte. Une granulométrie trop importante entraîne aussi des différences d'aspect physique, liées aux différences de rugosité entre la plaque et l'enduit.

La charge minérale représente préférentiellement entre 50% et 85% du poids total de l'enduit complémentaire.

Par ailleurs, l'enduit peut comprendre un agent hydrophobe, par exemple entre 0,2% et 5%, et de préférence entre 0,5% et 3% du poids total de l'enduit, par exemple un dérivé de silicone. Cet agent permet notamment un ralentissement de la cinétique de séchage de l'enduit, ce qui favorise sa non fissuration, mais également sa meilleure résistance à l'agression de la vapeur d'eau, lors des opérations d'enlèvement de papier peint, ceci sans pour autant nuire à la bonne accroche d'une peinture ou colle à papier, sur la surface d'ensemble, dont la surface apparente des joints. En fait, cet agent hydrophobe permet de niveler les pouvoirs absorbants des surfaces de l'enduit et du papier de parement de la plaque. Ainsi, toutes peintures ou colles à papier appliquées sur la surface d'ensemble obtenue connaissent peu de décalage de cinétique d'absorption entre l'enduit et la plaque, ce qui permet d'éviter l'apparition de spectres ou de défauts d'homogénéité de teinte.

L'enduit comprend également un liant organique dispersable en phase aqueuse, dans une proportion comprise entre 1 et 20%, et préférentiellement entre 2 et 12% du poids total de l'enduit complémentaire, par exemple des polyacétates de vinyle et/ou des esters d'acide acrylique. Le choix de ce liant est important, car il doit conférer à l'enduit une souplesse suffisante pour résister aux contraintes mécaniques, et il doit présenter, à la fois, un pouvoir collant pour obtenir une bonne accroche sur la surface d'ensemble, et une bonne résistance aux agressions de la lumière UV.

En outre, on prévoit dans la composition de l'enduit un agent de maniabilité, notamment un agent rétenteur d'eau et épaississant, par exemple de la méthylhydroxyéthylcellulose, dans une proportion de 1 à 15%, et de préférence de 2 à 12% du poids total de l'enduit complémentaire.

Enfin, on peut inclure dans la composition de l'enduit au moins un agent glissant, notamment une argile, dans la proportion de 0,1 à 2%, et préférentiellement de 0,1 à 0,6 % du poids total de l'enduit complémentaire. Ces argiles sont de préférence des dérivés silicatés, et plus préférentiellement des argiles du type attapulgite.

D'autres composants, tels que des biocides, des dispersants, des agents anti-moussants, et des pigments peuvent également être incorporés dans la composition de l'enduit de manière habituelle.

L'invention sera mieux comprise par l'exemple suivant détaillé, donné à titre indicatif et non limitatif.

On part de plaques de plâtre similaires à l'exemple 5 du document EP-A-0 521 804, qui sont assemblées avec un joint de bouchage classique, par exemple, un enduit de joint commercialisé sous la marque déposée "PREGYLYS"® de la Société PLATRES LAFARGE. Le jet supérieur du parement de la plaque est obtenu à partir de 65% de fibres cellulosiques chimiques blanchies, et 35% de talc, et est revêtu d'une couche pigmentaire comprenant comme charge minérale, 85% en poids de CaSO4,2H2O sous forme d'aiguilles de longueur entre 3 et 5 *µ*m, et comme liant, 10,3% en poids de copolymère styrène-butadiène. Le joint de bouchage reçoit ensuite une couche mince d'un enduit complémentaire de jointoiement selon l'invention ayant la composition suivante :
- 50 à 85% en poids de carbonate de calcium, granulométrie de 5 à 35 *µ*m, en tant que charge minérale ;
- 2 à 12% en poids d'un liant comportant des polyacétates de vinyle et des esters d'acide acrylique en dispersion aqueuse ;
- 0,5 à 3% en poids d'un dérivé de silicone en tant qu'agent hydrophobe ;
- 0,1 à 0,9% d'un dérivé cellulosique du type méthylhydroxyéthylcellulose ;
- 0,1 à 0,6% d'un agent glissant du type attapulgite ;
- 1 à 12% d'un autre dérivé silicaté, en tant qu'agent glissant complémentaire ;
- 0,1 à 5% d'un sel d'ammonium d'acide polycarboxylique en tant que dispersant ;
- 0,001 à 0,015 d'oxyde de fer, en tant que pigment ;
- 0,1 à 0,3% d'une préparation de N-formoles et isothiazolinones, en tant que biocide ;
- 0,1 à 0,3% d'un agent anti-moussant classique ;
- eau qsp 100%.

Les pourcentages de poids donnés sont par rapport au poids total de l'enduit, sauf indication contraire.

Pour les besoins de comparaison, des plaques standards conformément uniquement à la norme française NF P 72-302, et ne comportant pas le jet supérieur et couche pigmentaire définis ci-dessus, sont assemblées avec un enduit de joint pour plaque de plâtre de la gamme des enduits "PREGYLYS"®, commercialisé par la Société PLATRES LAFARGE.

Les caractéristiques des deux surfaces d'ensemble ainsi formées sont comparées par application des tests suivants :
(A) Degré de blancheur, ou facteur de réflectance R obtenu selon la norme NFQ 03038 à une longueur d'onde à 457 nm. Ce degré représente le rapport, en pourcentage, entre le rayonnement réfléchi du corps considéré et celui d'un diffuseur parfait dans les mêmes conditions.
(B) Absorption surfacique d'eau, obtenue par exemple selon le test COBB. Dans ce test, un anneau déterminant une surface de 100 cm² est rempli d'eau distillée à 23°C sur environ 10 mm de haut. L'eau est laissée au contact de la surface d'ensemble constituant le fond de l'anneau pendant une minute, puis l'eau est vidée et l'excédent essoré. Le gain de poids de la surface est ensuite déterminé, et ramené à une surface de 1m². Dans une variante, on dépose une goutte, de volume environ 0,05 cm³, d'eau distillée à 23°C en surface. Il est important que la goutte soit déposée et non laissée tomber d'une hauteur variable qui de ce fait l'écraserait plus ou moins, ce qui fausserait le résultat. La durée en minutes est représentative de l'absorption surfacique de la surface testée.
(C) Résistance au rayonnement UV, obtenue en exposant les surfaces d'ensemble, dans une enceinte comportant huit lampes à vapeur de mercure haute pression de 400 watts chacune, à une longueur d'onde qui n'est pas inférieure à 290 nm. Les surfaces sont maintenues à une distance de 15 cm des lampes et à une température de 60°C pendant 72 heures. Les écarts de couleur delta E* sont mesurés sur un spectrocolorimètre, selon le standard DIN 6174, sous un angle de 8°, illuminant D65 en brillant spéculaire inclus dans le système L*, a*, b*, dans lequel L* est la luminance, a* représente la transition du vert au rouge, et b* représente la transition du bleu au jaune. Un point E*, dans ce système, qui est fonction de L*, a*, b*, définit la colorimétrie d'un échantillon et l'écart est mesuré par rapport à un point de référence. De manière générale, un écart de couleur au-delà de 2 devient discernable à l'oeil nu.

Les résultats des essais (A) et (B) sont reportés dans le Tableau I et ceux de l'essai (C) dans le Tableau II ci-après.

**Tableau I**

| | **Surface d'ensemble standard** | | **Surface d'ensemble selon l'invention** | |
|---|---|---|---|---|
| **Réflectance R (%)** | Plaque | 50 à 60 | Plaque | 72 à 76 |
| | Enduit | 65 à 85 | Enduit | 72 à 76 |
| **Absorption COBB (g/m2)** | | 19 | | 13 |
| **Variante (min)** | Plaque | 50 | Plaque | >= 60 |
| | Enduit | 15 | Enduit | >= 60 |

Ceci montre que la surface d'ensemble selon la présente invention est nettement plus homogène que celle d'un ensemble selon la technique habituelle. Par ailleurs, le temps d'absorption plus homogène de la surface d'ensemble permet d'utiliser une peinture de pouvoir couvrant moindre que celui qui est nécessaire avec les plaques et enduits traditionnels, et favorise également la mise en peinture.

**Tableau II**

| **Avant exposition** | **standard** | **Invention** |
|---|---|---|
| **Mesures initiales de la plaque** | L* = 82,94 | L* = 90,41 |
| | a* = -0,43 | a* = -0,03 |
| | b* = 4,64 | b* = 3,13 |
| **Mesures initiales du joint** | L* = 90,70 | L* = 89,70 |
| | a* = 0,73 | a* = 0,50 |
| | b* = 5,28 | b* = 3,60 |
| | Ecart de couleur Plaque/Joint | Ecart de couleur Plaque/Joint |
| | delta E* = 7,87 | delta E* = 1 |
| **Exposition aux UV pendant 72 heures** | | |
| Mesures de la plaque après exposition | L* = 81,10 | L* = 90,38 |
| | a* = 0,69 | a* = -0,91 |
| | b* = 12,93 | b* = 7,40 |
| | Ecart de couleur delta E* = 8,56; jaunissement très sensible plus taches marrons | Ecart de couleur delta E* = 4,36; jaunissement sensible |
| Mesures du joint après exposition | L* = 88,90 | L* = 89,17 |
| | a* = 0,91 | a* = 0,50 |
| | b* = 3,83 | b* = 3,19 |
| | Ecart de couleur delta E* = 2,32; léger jaunissement plus quelques taches marrons | Ecart de couleur delta E* = 0,67; écart de couleur très faible |

Ce tableau montre que l'écart de couleur avant exposition aux UV est beaucoup plus faible pour une surface d'ensemble selon l'invention, que pour une surface d'ensemble telle qu'obtenue traditionnellement.

Ce tableau montre encore que l'évolution de l'écart de couleur après exposition aux UV est beaucoup moins importante dans la surface d'ensemble selon l'invention que traditionnellement. En effet, il faut que l'écart de couleur avant exposition et après exposition soit aussi réduit que possible, afin que la surface d'ensemble ne donne l'impression à l'oeil nu d'être tachetée, ou couvertes de zones de teinte et brillance différentes.

Ceci n'est pas possible avec une surface d'ensemble obtenue avec des plaques de plâtre et des produits traditionnels, mais le très faible écart de la surface d'ensemble conformément à l'invention permet de pallier cet inconvénient.

## Revendications

1. Procédé de construction de second oeuvre, selon lequel :
a) on dispose de plaques préfabriquées comportant chacune un corps de plâtre, au moins une feuille de papier de parement comprenant une couche externe présentant une face extérieure apparente, prête à être décorée ; d'un enduit de bouchage destiné à constituer l'essentiel des joints entre les différentes plaques ; et d'un enduit complémentaire de finition des joints ;
b) on assemble les plaques préfabriquées entre elles avec l'enduit de bouchage ;
c) on finit les joints avec l'enduit complémentaire, appliqué sur l'enduit de bouchage, de manière à obtenir une surface d'ensemble extérieure et apparente, relativement uniforme ou plane, y compris au niveau des joints ;
**caractérisé en ce que**, d'une part la structure et/ou la composition du papier de parement, et d'autre part, la composition de l'enduit complémentaire sont ajustées l'une par rapport à l'autre, pour obtenir, à l'état sec de l'enduit complémentaire, une surface d'ensemble présentant une couleur ou teinte, ainsi qu'une absorption d'eau de surface, et éventuellement un aspect de surface dont une réflectance, sensiblement homogènes dans pratiquement toute la surface d'ensemble, y compris au niveau de la face extérieure apparente des joints, moyennant quoi ladite surface d'ensemble peut être décorée, sans préparation de celle-ci, telle que revêtement avec au moins une couche d'impression complémentaire.

2. Procédé selon la revendication 1, **caractérisé en ce que** le facteur de réflectance de la surface d'ensemble, dont celui de la face extérieure apparente des joints, est compris entre 70 % et 80 %, et de préférence entre 72% et 76%, pour une longueur d'onde de 457 nm.

3. Procédé selon la revendication 1, **caractérisé en ce que** l'absorption surfacique d'eau de la surface d'ensemble, dont celle de la face extérieure apparente des joints, est au plus égale à 15 g/m² selon le test COBB, à 23°C.

4. Procédé selon la revendication 1, **caractérisé en ce que** d'une part la structure et/ou la composition de la feuille de papier de parement, et d'autre part la composition de l'enduit complémentaire sont ajustées l'une par rapport à l'autre pour obtenir, à l'état sec de l'enduit complémentaire, une décoloration ou coloration de la surface d'ensemble, dont celle de la face extérieure apparente des joints, présentant un écart de couleur delta E* au plus égal à 3, après exposition pendant 72 heures à une source de rayonnement UV, disposée à 15 cm de la surface de longueur d'onde au moins égale à 290 nm.

5. Procédé selon la revendication 1, selon lequel le papier de parement comprend une couche supérieure dite jet supérieur, comprenant des fibres cellulosiques blanches majoritairement chimiques, et une charge minérale de couleur claire, de préférence blanche, et une couche pigmentaire revêtissant la couche supérieure comprenant une charge minérale de couleur claire, de préférence blanche, et un liant, **caractérisé en ce que**, en correspondance, l'enduit complémentaire comprend une charge minérale de couleur claire, de préférence blanche, dont la granulométrie est comprise entre 5 et 35 µm.

6. Procédé selon la revendication 5, **caractérisé en ce que** la charge minérale représente entre 50 % et 85 % du poids total de l'enduit complémentaire.

7. Procédé selon la revendication 6, **caractérisé en ce que** l'enduit complémentaire comprend un agent hydrophobe, par exemple entre 0,2 % et 5 %, et de préférence entre 0,5 % et 3 % du poids total de l'enduit.

8. Procédé selon la revendication 6, **caractérisé en ce que** l'enduit complémentaire comprend un liant organique dispersable en phase aqueuse, dans une proportion comprise entre 1 et 20 %, et préférentiellement entre 2 et 12 % du poids total de l'enduit complémentaire.

9. Procédé selon la revendication 6, **caractérisé en ce que** l'enduit complémentaire comprend au moins un agent glissant, notamment une argile, dans la proportion de 0,1 à 2 %, et préférentiellement de 0,1 à 0,6 % du poids total de l'enduit complémentaire.

10. Utilisation d'un enduit complémentaire de jointoiement comprenant une charge minérale de couleur claire, de préférence blanche, dont la granulométrie est comprise entre 5 et 35 *µ* m, pour la mise en oeuvre d'un procédé conforme à la revendication 1.

## Patentansprüche

1. Konstuktionstechnisches Verfahren für Ausbauarbeiten, bei dem:
a) vorgefertigte Platten, die jeweils einen Gipskörper und zumindest ein Blatt Verkleidungspapier mit einer äußeren Schicht aufweisen, die eine sichtbare Außenseite aufweist, die für die Dekoration bereit ist, ein Füllputz, der dazu bestimmt ist, den Kern der Fugen zwischen den verschiedenen Platten zu bilden, und ein Komplementärputz für die Endbearbeitung der Fugen bereitgestellt werden;
b) die vorgefertigten Platten untereinander mit dem Füllputz zusammengefügt werden;
c) die Fugen mit dem Komplementärputz, der auf den Füllputz aufgetragen wird, endbearbeitet werden, derart, daß eine äußere und sichtbare Gesamtoberfläche erhalten wird, die einschließlich im Bereich der Fugen relativ gleichmäßig bzw. eben ist;
**dadurch gekennzeichnet, daß** einerseits die Struktur und/oder die Zusammensetzung des Verkleidungspapiers und andererseits die Zusammensetzung des Komplementärputzes aneinander angepaßt sind, um im trockenen Zustand des Komplementärputzes eine Gesamtoberfläche zu erhalten, die eine Farbe oder einen Farbton sowie eine Oberflächenabsorption von Wasser und ggf. einen Oberflächeneffekt, darunter ein Reflexionsvermögen, aufweist, die in praktisch der vollständigen Gesamtoberfläche einschließlich im Bereich der sichtbaren Außenseite der Fugen homogen sind, wodurch die Gesamtoberfläche ohne Präparation derselben, wie mit einer Beschichtung mit zumindest einer zusätzlichen Grundierschicht, dekoriert werden kann.

2. Verfahren nach Anspruch 1, **dadurch gekennzeichnet, daß** der Reflexionsfaktor der Gesamtoberfläche, darunter derjenige der sichtbaren Außenseite der Fugen, im Bereich von 70 % bis 80 %, und vorzugsweise von 72 % bis 76 % bei einer Wellenlänge von 457 nm liegt.

3. Verfahren nach Anspruch 1, **dadurch gekennzeichnet, daß** die Oberflächenabsorption von Wasser der Gesamtoberfläche, darunter diejenige der sichtbaren Außenseite der Fugen, höchstens gleich 15 g/m² gemäß dem Testverfahren COBB bei 23° C beträgt.

4. Verfahren nach Anspruch 1 **dadurch gekennzeichnet, daß** einerseits die Struktur und/oder die Zusammensetzung des Blattes Verkleidungspapier und andererseits die Zusammensetzung des Komplementärputzes aneinander angepaßt sind, um im trockenen Zustand des Komplementärputzes eine Entfärbung oder Färbung der Gesamtoberfläche, darunter diejenige der sichtbaren Außenseite der Fugen, zu erhalten, die einen Farbabstand delta E* von höchstens gleich 3 nach Aussetzung einer UV-Strahlungsquelle mit einer Wellenlänge von zumindest = 290 nm während 72 h, die 15 cm von der Oberfläche angeordnet ist, aufweist.

5. Verfahren nach Anspruch 1, bei dem das Verkleidungspapier eine als Oberstrahl bezeichnete Oberschicht aufweist, die hauptsächlich chemische weiße Zellulosefasern und eine mineralische Füllung von heller Farbe, die vorzugsweise weiß ist, sowie eine Pigmentschicht, die die Oberschicht bedeckt, die eine mineralische Füllung von heller Farbe, die vorzugsweise weiß ist, und ein Bindemittel aufweist, **dadurch gekennzeichnet, daß** in Übereinstimmung der Komplementärputz eine mineralische Füllung von heller Farbe, die vorzugsweise weiß ist, aufweist, deren Korngröße im Bereich von 5 bis 35 µm liegt.

6. Verfahren nach Anspruch 5, **dadurch gekennzeichnet, daß** die mineralische Füllung 50 % bis 85 % des Gesamtgewichts des Komplemantärputzes ausmacht.

7. Verfahren nach Anspruch 6, **dadurch gekennzeichnet, daß** der Komplementärputz ein hydrophobes Mittel, beispielsweise von 0,2 % bis 5 %, und vorzugsweise von 0,5 % bis 3 % des Gesamtgewichts des Putzes, aufweist.

8. Verfahren nach Anspruch 6, **dadurch gekennzeichnet, daß** der Komplementärputz ein in wässriger Phase lösbares organisches Bindemittel in einem Anteil von 1 % bis 20 % und vorzugsweise von 2 % bis 12 % des Gesamtgewichts des Komplementärputzes aufweist.

9. Verfahren nach Anspruch 6, **dadurch gekennzeichnet, daß** der Komplementärputz zumindest ein Glättmittel, insbesondere einen Ton, in einem Anteil von 0,1 % bis 2 %, und vorzugsweise von 0,1 % bis 0,6 % des Gesamtgewichts des Komplementärputzes aufweist.

10. Verwendung eines Komplementärputzes zur Verfugung, der eine mineralische Füllung von heller Farbe aufweist, die vorzugsweise weiß ist, deren Korngröße im Bereich von 5 bis 35 µm liegt, für die Durchführung eines Verfahrens nach Anspruch 1.

## Claims

1. Method for the construction of interior works, according to which :
a) there are prefabricated boards each comprising a plasterboard, at least one sheet of lining paper comprising one outer layer having a visible outer face ready to be decorated; of a sealing coat intended to form the essential part of the joints between the various boards; and one additional joint-finishing coat;
b) the prefabricated boards are assembled together with the sealing coat;
c) the joints are finished with the additional coat, applied onto the sealing coat, so as to obtain an overall visible outer surface which is relatively uniform or plane, including in the region of the joints;
**characterized in that**, on the one hand, the structure and/or composition of the lining paper, and, on the other hand, the composition of the additional coat are coordinated with one another in order, in the dry state of the additional coat, to obtain an overall surface having one colour or shade, as well as an absorption of surface water and possibly a surface appearance including reflectance which are substantially homogeneous in virtually the entire overall surface, including in the region of the visible outer face of the joints by virtue of which said overall surface can be decorated, without preparation of the latter, such as covering with at least one additional printing layer.

2. Method according to Claim 1, **characterized in that** the reflectance factor of the overall surface, including that of the visible outer face of the joints, is between 70% and 80%, and preferably between 72% and 76%, for a wavelength of 475 nm.

3. Method according to Claim 1, **characterized in that** the surface water absorption of the overall surface, including that of the visible outer face of the joints, is at most equal to 15 g/m² according to the COBB test, at 23°C.

4. Method according to Claim 1, **characterized in that**, on the one hand, the structure and/or composition of the sheet of lining paper and, on the other hand, the composition of the additional coat are coordinated with one another to obtain, in the dry state of the additional coat, a decoloration or coloration of the overall surface, including that of the visible outer face of the joints, has a colour deviation (delta E*) at most equal to 3 after exposure for 72 hours to a source of UV radiation arranged at 15 cm from the surface and having a wavelength at least equal to 290 nm.

5. Method according to Claim 1, according to which the lining paper comprises an upper layer, called an upper web, comprising white cellulose fibres, mainly synthetic, a mineral filler of light colour, preferably white, and a pigment layer covering the upper layer, comprising a mineral filler of light colour, preferably white, and a binder,
**characterized in that**, correspondingly, the additional coat comprises a mineral filler of light colour, preferably white, the grain size of which is between 5 and 35 µm.

6. Method according to Claim 5, **characterized in that** the mineral filler represents between 50% and 85% of the total weight of the additional coat.

7. Method according to Claim 6, **characterized in that** the additional coat comprises a hydrophobic agent, for example between 0.2% and 5%, and preferably between 0.5% and 3%, of the total weight of the coat.

8. Method according to Claim 6, **characterized in that** the additional coat comprises an organic binder dispersible in aqueous phase, in a proportion of between 1 and 20%, and preferably between 2 and 12%, of the total weight of the additional coat.

9. Method according to Claim 6, **characterized in that** the additional coat comprises at least one slipping agent, especially a clay, in the proportion of 0.1 to 2%, and preferably of 0.1 to 0.6%, of the total weight of the additional coat.

10. Use of an additional joint-pointing coat comprising a mineral filler of light colour, preferably white, the grain size of which is between 5 and 35 µm for use in a process conforming to Claim 1.
